# EUROPEAN PATENT SPECIFICATION

(11) **EP 4 325 617 B1**
(45) Date of publication and mention of the grant of the patent: **18.03.2026**
(21) Application number: 22911956.5
(22) Date of filing: 21.12.2022
(51) Int. Cl.: H01M 10/0562, H01M 10/0585

(54) **ALL-SOLID-STATE BATTERY COMPRISING TWO TYPES OF SOLID ELECTROLYTE LAYERS AND METHOD FOR MANUFACTURING SAME**
FESTKÖRPERBATTERIE MIT ZWEI ARTEN VON FESTELEKTROLYTSCHICHTEN UND VERFAHREN ZUR HERSTELLUNG DAVON
BATTERIE ENTIÈREMENT SOLIDE COMPRENANT DEUX TYPES DE COUCHES D'ÉLECTROLYTE SOLIDE ET SON PROCÉDÉ DE FABRICATION

(30) Priority: 24.12.2021 KR 20210187611
(43) Date of publication of application: 21.02.2024
(73) Proprietor: LG Energy Solution, Ltd., Seoul 07335 (KR)
(72) Inventor: LEE, Jung Pil, Daejeon 34122 (KR); CHOI, Lak Young, Daejeon 34122 (KR)
(74) Representative: Goddar, Heinz J.
(86) International application number: PCT/KR2022/021011
(87) International publication number: WO 2023/121323

(56) References cited:
- WO-A1-2015/151144
- CN-A- 111 430 789
- JP-B2- 6 894 948
- JP-B2- 6 936 661
- KR-A- 20190 111 996
- KR-A- 20200 042 344
- KR-A- 20210 022 197
- US-A1- 2019 305 370
- SEN SUDESHNA ET AL: "The role of polymers in lithium solid-state batteries with inorganic solid electrolytes", vol. 9, no. 35, 20 July 2021 (2021-07-20), GB, pages 18701 - 18732, XP093239577, ISSN: 2050-7488, Retrieved from the Internet <URL:https://pubs.rsc.org/en/content/articlepdf/2021/ta/d1ta02796d> DOI: 10.1039/D1TA02796D

## Description

### [Technical Field]

The present invention relates to an all-solid-state battery including two kinds of solid electrolyte layers and a method of manufacturing the same. More particularly, the present invention relates to an all-solid-state battery including two kinds of solid electrolyte layers configured such that the contact area between the solid electrolyte layer and a negative electrode is increased, whereby a danger of short circuit in the all-solid-state battery is reduced, and a method of manufacturing the same.

### [Background Art]

A lithium secondary battery, which is rechargeable and has high energy density, has attracted attention as a new energy source that has environmentally friendly characteristics, since the lithium secondary battery not only remarkably reduces the use of fossil fuels but also does not generate by-products as the result of the use of energy.

The lithium secondary battery has also been spotlighted as an energy source for devices having high output and high energy density, such as electric vehicles, as well as wearable devices or portable devices. As a result, research and development to increase operating voltage and energy density of the lithium secondary battery has been rapidly conducted.

A lithium ion secondary battery including an electrolytic solution and a separator, which is a kind of lithium secondary battery, has a shortcoming in that there is a high danger of electrolytic solution leakage and fire outbreak. As an alternative thereto, an all-solid-state battery configured such that a noncombustible solid is used as an electrolyte, whereby there is a low danger of fire outbreak and explosion, has been proposed.

The all-solid-state battery has improved safety. In addition, since the solid electrolyte is used, the movement speed of lithium ions is high, and the thickness of a negative electrode is reduced, whereby energy density of the all-solid-state battery is increased.

As a means configured to increase the energy density of the all-solid-state battery, a negative electrode constituted by a current collector alone, without inclusion of a negative electrode mixture layer, has been proposed.

When the all-solid-state battery configured as described above is charged, lithium is plated on the negative electrode current collector at a part at which the negative electrode current collector and a solid electrolyte layer contact each other, and when the all-solid-state battery configured as described above is discharged, lithium plated on the negative electrode current collector is stripped therefrom. As the result of repeated charging and discharging, the amount of lithium plated on the negative electrode current collector may gradually increase, whereby lithium dendrites may grow. The lithium dendrites may cause short circuit in the battery or may reduce capacity of the battery.

That is, when the contact area between the negative electrode current collector and the solid electrolyte layer is small, lithium plating locally occurs, whereby a possibility of growth of the lithium dendrites may increase.

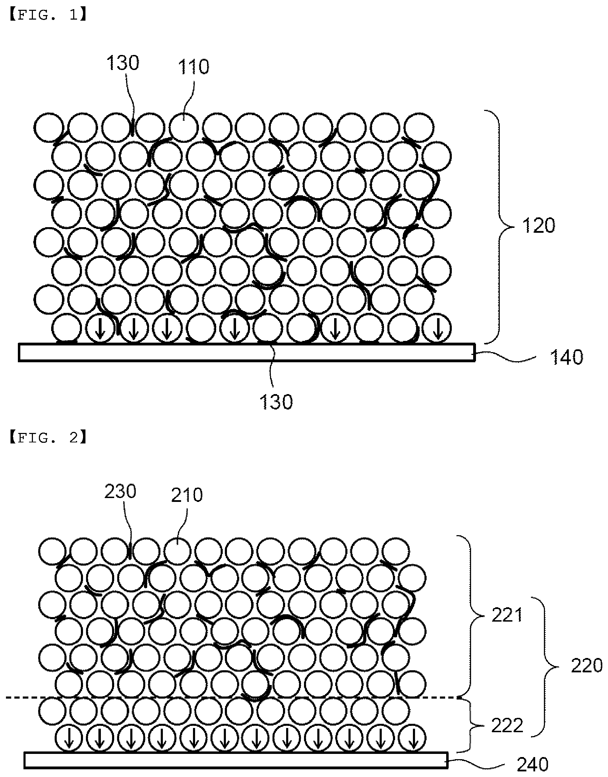

In connection therewith, FIG. 1 is a sectional view of a solid electrolyte layer and a negative electrode in a conventional high energy density all-solid-state battery.

Referring to FIG. 1, the solid electrolyte layer 120 is formed at one surface of the negative electrode 140. The solid electrolyte layer 120 is configured such that solid electrolyte particles 110 are bound with each other by a binder 130, and is disposed at one surface of the negative electrode 140.

Lithium that has moved to the negative electrode 140 through the solid electrolyte particles 110 is plated on the surface of the negative electrode 140, but lithium cannot move to the negative electrode due to the binder 130 located between the solid electrolyte particles 110 and the negative electrode 140.

In FIG. 1, solid electrolyte particles that allow lithium to move therethrough, among the solid electrolyte particles that contact the negative electrode, are indicated by arrows, and solid electrolyte particles having lithium movement paths blocked by the binder 130 are not indicated by arrows.

As described above, lithium cannot move due to the binder or the movement speed of lithium is reduced, whereby resistance of the all-solid-state battery is increased.

Consequently, there is a need to develop an all-solid-state battery configured such that the contact area between a solid electrolyte layer and a negative electrode is increased, whereby resistance of the all-solid-state battery is low.

An all-solid-state battery having a sulfide-based solid electrolyte applied thereto may be manufactured in the state in which a solid electrolyte layer is pressed without a binder in order to minimize resistance of the solid electrolyte layer. In this case, however, the thickness of the solid electrolyte layer is several hundred micrometers, and therefore the solid electrolyte layer is not suitable for manufacture of a high energy density all-solid-state battery.

In connection therewith, Patent Document 1 relates to an all-solid-state battery configured such that an electrolyte layer is disposed in a positive electrode layer and a negative electrode layer, the electrolyte layer includes a first solid electrolyte layer and a second solid electrolyte layer, and a binder is included in the first solid electrolyte layer and/or the second solid electrolyte layer.

The all-solid-state battery of Patent Document 1 includes a sulfide-based solid electrolyte, wherein it is possible to secure the force of dispersing sulfide-based solid electrolyte particles since the binder is included, and the thickness of the solid electrolyte layer is reduced, whereby it is possible to reduce resistance of the all-solid-state battery.

Patent Document 2 relates to an electrolyte layer for all-solid-state batteries configured such that two or more electrolyte layers are stacked and the two or more electrolyte layers have different binder contents, wherein a substrate is smoothly separated from the electrolyte layer when a lamination method is used, and the thickness of the electrolyte layer is appropriately adjusted, whereby it is possible to minimize interfacial resistance between an electrode layer and the electrolyte layer.

However, Patent Document 1 and Patent Document 2 do not suggest a method of solving a problem in that resistance of the all-solid-state battery is increased by the binder included in the solid electrolyte layer.

Patent Documents 3, 4 and 5 disclose other all-solid-state batteries.

### (Prior Art Documents)

(Patent Document 1) Japanese Registered Patent Publication No. 5930035 (2016.06.08)
(Patent Document 2) Korean Patent Application Publication No. 2017-0055325 (2017.05.19)
(Patent Document 3) US patent application US 2019/305370 A1
(Patent Document 4) Japanese Patent JP 6 894948 B2.
(Patent Document 5) WO 2015/151144 A1

### [Disclosure]

### [Technical Problem]

The present invention has been made in view of the above problems, and it is an object of the present invention to provide an all-solid-state battery including two kinds of solid electrolyte layers configured such that growth of lithium dendrites at a surface of a negative electrode is prevented, whereby safety of the all-solid-state battery is secured, and a method of manufacturing the same.

### [Technical Solution]

An all-solid-state battery according to the present invention to accomplish the above object includes a positive electrode, a negative electrode, and a solid electrolyte interposed between the positive electrode and the negative electrode, wherein the solid electrolyte is constituted by a first solid electrolyte layer including a binder and a second solid electrolyte layer not including a binder, and the second solid electrolyte layer faces the negative electrode, wherein the binder is one or more selected from a group consisting of polytetrafluoroethylene, polyethylene oxide, polyethylene glycol, polyacrylonitrile, polyvinyl chloride, polymethyl methacrylate, polypropylene oxide, polyphosphazene, polysiloxane, polydimethylsiloxane, polyvinylidene fluoride, polyvinylidene fluoride-hexafluoropropylene (PVDF-HFP), polyvinylidene fluoride-chlorotrifluoroethylene (PVDF-CTFE), polyvinylidene fluoride-tetrafluoroethylene (PVDF-TFE), polyvinylidene carbonate, polyvinylpyrrolidone, styrene-butadiene rubber, nitrile-butadiene rubber, and hydrogenated nitrile butadiene rubber.

Ingredients of the first solid electrolyte layer and the second solid electrolyte layer may be identical to each other except the binder.

The thickness of the first solid electrolyte layer may be equal to or greater than the thickness of the second solid electrolyte layer.

The binder may be included in the first solid electrolyte layer in an amount of 0.2 weight% to 15 weight% based on the total weight of a solid content included in the first solid electrolyte layer.

The first solid electrolyte layer and the second solid electrolyte layer may be adhered to each other.

The negative electrode may not include a negative electrode mixture layer.

The negative electrode may include a coating layer and an ion transport layer.

Solid electrolyte particles present at a surface of the second solid electrolyte layer may contact the negative electrode.

The present invention provides a battery module including the all-solid-state battery as a unit cell.

The present invention provides a method of manufacturing the all-solid-state battery.

Specifically, the method may include (a) manufacturing a first solid electrolyte layer slurry and a second solid electrolyte layer slurry, (b) applying each of the first solid electrolyte layer slurry and the second solid electrolyte layer slurry to a release film by coating, (c) drying a first solid electrolyte layer slurry coating layer and a second solid electrolyte layer slurry coating layer manufactured in step (b) to form a first solid electrolyte layer and a second solid electrolyte layer, (d) stacking the first solid electrolyte layer and the second solid electrolyte layer so as to face each other and pressing the first solid electrolyte layer and the second solid electrolyte layer, (e) removing the release film to acquire a solid electrolyte layer, and (f) disposing the solid electrolyte layer between a positive electrode and a negative electrode to assemble an all-solid-state battery, wherein the second solid electrolyte layer is disposed so as to face the negative electrode.

Step (d) may be performed using an isostatic pressing method.

Isostatic pressing may be performed at a pressure of 10 MPa to 100 MPa.

Step (d) may be performed at a temperature of 5°C to 150°C.

In addition, the present invention may provide various combinations of the above solving means.

### [Advantageous Effects]

As is apparent from the above description, in an all-solid-state battery according to the present invention, the contact area between a solid electrolyte layer and a negative electrode at the interface therebetween is increased, whereby it is possible to prevent local lithium plating on a surface of the negative electrode.

Consequently, it is possible to inhibit growth of lithium dendrites at the surface of the negative electrode.

As a result, a danger of short circuit in the all-solid-state battery is lowered, whereby it is possible to improve safety of the all-solid-state battery.

In addition, a lithium movement path is widely secured, whereby it is possible to reduce resistance of the all-solid-state battery.

### [Description of Drawings]

FIG. 1 is a sectional view of a solid electrolyte layer and a negative electrode in a conventional high energy density all-solid-state battery.
FIG. 2 is a sectional view of a solid electrolyte layer and a negative electrode in an all-solid-state battery according to the present invention.

### [Best Mode]

Now, preferred embodiments of the present invention will be described in detail with reference to the accompanying drawings such that the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims, singular forms are intended to include plural forms unless mentioned otherwise.

Also, in the description of the invention and the claims, "or" includes "and" unless mentioned otherwise. Therefore, "including A or B" means three cases, namely, the case including A, the case including B, and the case including A and B.

An embodiment of the present invention will be described in detail with reference to the accompanying drawings.

An all-solid-state battery according to the present invention may include a positive electrode, a negative electrode, and a solid electrolyte interposed between the positive electrode and the negative electrode, wherein the solid electrolyte may be constituted by a first solid electrolyte layer including a binder and a second solid electrolyte layer not including a binder, and the second solid electrolyte layer may face the negative electrode.

The positive electrode is manufactured, for example, by applying a positive electrode mixture including a positive electrode active material to a positive electrode current collector and drying the positive electrode mixture. The positive electrode mixture may further optionally include a binder, a conductive agent, and a filler, as needed.

The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion of the positive electrode active material. The positive electrode current collector may be configured in any of various forms, such as a film, a sheet, a foil, a net, a porous body, a foam body, and a non-woven fabric body.

The positive electrode active material is a material that is capable of inducing electrochemical reaction, and may include at least one of positive electrode active materials represented by Chemical Formulas 1 to 3 below.

LiₐCo₁₋ₓMₓO₂ (1)

LiₐMn_{2-y}M_{y}O₄ (2)

LiₐFe_{1-z}M₂PO₄ (3)

In the above formulas, 0.8≤a≤1.2, 0≤x≤0.9, 0≤y≤0.6, and 0≤z≤0.5, and
M is one or more selected from the group consisting of Ti, Cd, Cu, Cr, Mo, Mg, Al, Ni, Nb, Mn, V, and Zr.

That is, the positive electrode active material may include one or more material selected from the group consisting of a lithium metal oxide having a layered structure represented by Chemical Formula 1, a lithium-manganese-based oxide having a spinel structure represented by Chemical Formula 2, and a lithium-containing phosphate having an olivine structure represented by Chemical Formula 3.

Although the kind of the lithium metal oxide having the layered structure is not restricted, for example, one or more selected from the group consisting of lithium cobalt oxide, lithium nickel oxide, lithium manganese oxide, lithium cobalt-nickel oxide, lithium cobalt-manganese oxide, lithium manganese-nickel oxide, lithium nickel-cobalt-manganese oxide, and a material derived therefrom by substituting or doping with another element may be used.

The lithium nickel-cobalt-manganese oxide may be represented by Li_{1+z}Ni_{b}Co_{c}Mn_{1-(b+c+d)}M_{d}O₍₂₋ₑ₎Aₑ (where - 0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, and A = F, P or Cl).

Although the kind of the lithium-manganese-based oxide having the spinel structure is also not restricted, for example, one or more selected from the group consisting of lithium manganese oxide, lithium nickel manganese oxide, and a material derived therefrom by substituting or doping with another element may be used.

In addition, although the kind of the lithium-containing phosphate having the olivine structure is also not restricted, for example, lithium iron phosphate or a material derived therefrom by substituting or doping with another element may be used.

The other element may be one or more selected from the group consisting of Al, Mg, Mn, Ni, Co, Cr, V, and Fe.

The binder is a component assisting in binding between the active material and the conductive agent and in binding with the current collector. The binder is generally added in an amount of 1 weight% to 30 weight% based on the total weight of the mixture including the positive electrode active material. For example, the binder may include one or more selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM) rubber, styrene butadiene rubber, fluoro rubber, and a copolymer thereof.

The conductive agent is generally added so that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as ethylene black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; a conductive material, such as a polyphenylene derivative; graphene; or carbon nanotube may be used as the conductive agent.

The filler, which is a component used to inhibit expansion of the electrode, may be optionally used. There is no particular limit to the filler, as long as the filler is made of a material that does not cause chemical changes in a battery to which the filler is applied. For example, a polyolefin-based polymer, such as polyethylene or polypropylene; or a fibrous material, such as glass fiber or carbon fiber is used as the filler.

In a concrete example, the negative electrode may be constituted by a negative electrode current collector alone, without inclusion of a negative electrode mixture layer.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

In a concrete example, the negative electrode may be constituted by a negative electrode current collector and lithium metal added to at least one surface of the negative electrode current collector by coating. The method of adding the lithium metal is not particularly restricted. For example, the lithium metal may be added using a deposition method selected from the group consisting of a thermal deposition method, an e-beam deposition method, a chemical vapor deposition method, and a physical vapor deposition method.

Alternatively, the negative electrode may be configured to have a multilayered structure including a coating layer and an ion transport layer formed on the negative electrode current collector. For example, a silver (Ag) coating layer may be formed as the coating layer. For example, a conductive binder, such as acetylene black or polyvinylidene fluoride, may be included as the ion transport layer.

FIG. 2 is a sectional view of a solid electrolyte layer and a negative electrode in an all-solid-state battery according to the present invention.

Referring to FIG. 2, the solid electrolyte layer 220 is provided on one surface of the negative electrode 240. The solid electrolyte layer 220 is configured to have a two-layered structure constituted by a first solid electrolyte layer 221 and a second solid electrolyte layer 222.

The first solid electrolyte layer 221 includes a binder 230, and the second solid electrolyte layer 222 does not include a binder. The second solid electrolyte layer 222 is disposed so as to face the negative electrode 240. Solid electrolyte particles 210 present at the surface of the second solid electrolyte layer 222 contact the negative electrode 240.

The binder may function to secure the force of binding between the solid electrolyte particles and to increase the force of adhesion between the solid electrolyte particles and the electrode, whereas the binder may reduce mobility of lithium ions. In particular, when lithium cannot move to the negative electrode 140 at the interface between the electrolyte layer 120 and the negative electrode due to the binder 130, as in the solid electrolyte layer and the negative electrode shown in FIG. 1, lithium plating occurs at only a part of the negative electrode to which lithium can move. As a result, a lithium nucleus is formed at the place at which lithium plating has occurred, whereby a possibility of the generation of lithium dendrites increases.

In the present invention, therefore, the second solid electrolyte layer, which contacts the negative electrode, is configured not to include a binder, and all of the solid electrolyte particles 210 present at the outermost layer of the second solid electrolyte layer opposite the negative electrode may directly contact the negative electrode. Consequently, it is possible to increase the contact area between the negative electrode 240 and the solid electrolyte particles 210. That is, as indicated by arrows, lithium can move from all of the solid electrolyte particles 210 present at the outermost layer of the second solid electrolyte layer 222 to the negative electrode 240.

As the result of providing the above structure, it is possible to inhibit the generation of lithium dendrites, whereby it is possible to reduce short circuit in the all-solid-state battery.

The binder includes one or more selected from the group consisting of polytetrafluoroethylene, polyethylene oxide, polyethylene glycol, polyacrylonitrile, polyvinyl chloride, polymethyl methacrylate, polypropylene oxide, polyphosphazene, polysiloxane, polydimethylsiloxane, polyvinylidene fluoride, polyvinylidene fluoride-hexafluoropropylene (PVDF-HFP), polyvinylidene fluoride-chlorotrifluoroethylene (PVDF-CTFE), polyvinylidene fluoride-tetrafluoroethylene (PVDF-TFE), polyvinylidene carbonate, polyvinylpyrrolidone, styrene-butadiene rubber, nitrile-butadiene rubber, and hydrogenated nitrile butadiene rubber.

The binder may be included in the first solid electrolyte layer in an amount of 0.2 weight% to 15 weight%, specifically 1 weight% to 10 weight%, more specifically 1 weight% to 5 weight%, based on the total weight of a solid content included in the first solid electrolyte layer.

If the binder is included in an amount of less than 0.2 weight%, the force of binding between the solid electrolyte particles is low, whereby it may be difficult to configure the solid electrolyte layer and short circuit may easily occur, which is undesirable. If the binder is included in an amount of greater than 15 weight%, ionic conductivity may be greatly reduced, which is undesirable.

In consideration of the fact that the binder functions to secure the force of binding between the solid electrolyte particles, the thickness of the first solid electrolyte layer 221 including the binder may be equal to or greater than the thickness of the second solid electrolyte layer 222 in order to secure stability in shape of the solid electrolyte layer.

For example, the thickness of the first solid electrolyte layer may be 100% to 1,000%, specifically greater than 100% to 500%, of the thickness of the second solid electrolyte layer.

Also, if the total thickness of the solid electrolyte layer is too large, resistance may increase, and if the total thickness of the solid electrolyte layer is too small, low strength and insulation may become a problem. Consequently, the total thickness of the solid electrolyte layer may range from 20 µm to 100 µm.

In a concrete example, the minimum thickness of the first solid electrolyte layer may be 10 µm, and the minimum thickness of the second solid electrolyte layer may be 10 µm. That is, if the second solid electrolyte layer is thicker than the first solid electrolyte layer, it is possible to obtain an effect advantageous in securing ionic conductivity; however, adhesive force of the solid electrolyte layer may be low, whereby it may be difficult to handle the solid electrolyte layer, which is undesirable.

The first solid electrolyte layer and the second solid electrolyte layer function as an ion transport path between the positive electrode and the negative electrode. In order to prevent lowering in ionic conductivity, therefore, the first solid electrolyte layer and the second solid electrolyte layer may be configured so as to be completely adhered to each other over the entirety of the interface therebetween.

In a concrete example, ingredients of the first solid electrolyte layer and the second solid electrolyte layer may be identical to each other except the binder.

For example, the kind of the solid electrolyte included in the first solid electrolyte layer and the kind of the solid electrolyte included in the second solid electrolyte layer may be identical to each other, and the solid electrolyte may be any one selected from the group consisting of a sulfide-based solid electrolyte, an oxide-based solid electrolyte, or a polymer-based solid electrolyte.

The sulfide-based solid electrolyte may be a compound that contains a sulfur atom (S), exhibits ionic conductivity of metal belonging to Group 1 or 2 of the periodic table, and exhibits electron insulation. It is preferable for the sulfide-based solid electrolyte to contain at least Li, S, and P as elements and to exhibit high lithium ion conductivity; however, elements other than Li, S, and P may be included depending on purposes or circumstances.

Specifically, Li₆PS₅Cl, Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, or Li₁₀GeP₂S₁₂ may be used as a sulfide-based inorganic solid electrolyte.

An amorphization method may be used as a method of synthesizing the sulfide-based inorganic solid electrolyte material. Examples of the amorphization method may include a mechanical milling method, a solution method, and a melting and rapid cooling method. Processing at a normal temperature (25°C) is possible, and therefore it is possible to simplify the manufacturing process.

The oxide-based solid electrolyte may be a compound that contains an oxygen atom (O), exhibits ionic conductivity of metal belonging to Group 1 or 2 of the periodic table, and exhibits electron insulation.

As the oxide-based solid electrolyte, for example, there may be used LiₓₐLa_{ya}TiO₃ (xa=0.3 to 0.7 and ya=0.3 to 0.7) (LLT), Li_{xb}La_{yb}Zr_{zb}M^{bb}_{mb}O_{nb} (where M^{bb} is at least one of Al, Mg, Ca, Sr, V, Nb, Ta, Ti, Ge, In, and Sn, 5≤xb≤10, 1≤yb≤4, 1≤zb≤4, 0≤mb≤2, and 5≤nb≤20) , Li_{xc}B_{yc}M^{cc}_{zc}O_{nc} (where M^{cc} is at least one of C, S, Al, Si, Ga, Ge, In, and Sn, 0≤xc≤5, 0≤yc≤1, 0≤zc≤1, and 0≤nc≤6), Li_{xd}(Al, Ga)_{yd}(Ti, Ge)_{zd}Si_{ad}P_{md}O_{nd} (where 1≤xd≤3, 0≤yd≤1, 0≤zd≤2, 0≤ad≤1, 1≤md≤7, and 3≤nd≤13), Li₍₃₋₂ₓₑ₎M^{ee}ₓₑD^{ee}O (where xe indicates a number between 0 and 0.1, M^{ee} indicates a bivalent metal atom, and D^{ee} indicates a halogen atom or a combination of two or more kinds of halogen atoms) , Li_{xf}Si_{yf}O_{zf} (1≤xf≤5, 0<yf≤3, and 1≤zf≤10), Li_{xg}S_{yg}O_{zg} (1≤xg≤3, 0<yg≤2, and 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w<1), Li_{3.5}Zn_{0.25}GeO₄ having a lithium super ionic conductor (LISICON) type crystalline structure, La_{0.55}Li_{0.35}TiO₃ having a perovskite type crystalline structure, LiTi₂P₃O₁₂ having a sodium super ionic conductor (NASICON) type crystalline structure, Li_{1+xh+yh} (Al, Ga) ₓₕ (Ti, Ge)₂₋ₓₕSi_{yh}P_{3-yh}O₁₂ (where 0≤xh≤1 and 0≤yh≤1), or Li₇La₃Zr₂O₁₂ (LLZ) having a garnet type crystalline structure. Alternatively, a phosphorus compound including Li, P, and O may also be used. For example, lithium phosphate (Li₃PO₄), LiPON in which a portion of oxygen in lithium phosphate is replaced by nitrogen, or LiPOD¹ (D¹ being at least one selected from among Ti, V, Cr, Mn, Fe, Co, Ni, Cu, Zr, Nb, Mo, Ru, Ag, Ta, W, Pt, and Au) may be used. Alternatively, LiA¹ON (A¹ being at least one selected from among Si, B, Ge, Al, C, and Ga) may also be used.

The polymer-based solid electrolyte may be a solid polymer electrolyte formed by adding a polymer resin to a lithium salt that is independently solvated or a polymer gel electrolyte formed by impregnating a polymer resin with an organic electrolytic solution containing an organic solvent and a lithium salt.

The solid polymer electrolyte is not particularly restricted as long as the solid polymer electrolyte is made of, for example, a polymer material that is ionically conductive and is generally used as a solid electrolyte material of the all-solid-state battery. Examples of the solid polymer electrolyte may include a polyether-based polymer, a polycarbonate-based polymer, an acrylate-based polymer, a polysiloxane-based polymer, a phosphazene-based polymer, polyethylene oxide, a polyethylene derivative, an alkylene oxide derivative, a phosphoric acid ester polymer, poly agitation lysine, polyester sulfide, polyvinyl alcohol, polyvinylidene fluoride, and a polymer containing an ionic dissociation group. Alternatively, the solid polymer electrolyte may include a branch-like copolymer formed by copolymerizing an amorphous polymer, such as polymethylmethacrylate (PMMA), polycarbonate, polysiloxane, and/or phosphazene, which is a comonomer, in the main chain of polyethylene oxide (PEO), which is a polymer resin, a comb-like polymer resin, and a crosslinking polymer resin.

The polymer gel electrolyte may include an organic electrolytic solution including a lithium salt and a polymer resin, wherein the organic electrolytic solution is included in an amount of 60 to 400 parts by weight based on weight of the polymer resin. Although the polymer resin applied to the gel electrolyte is not limited to specific components, for example, a polyvinylchloride (PVC)-based resin, a polymethylmethacrylate (PMMA)-based resin, polyacrylonitrile (PAN), polyvinylidene fluoride (PVDF), and polyvinylidene fluoride hexafluoropropylene (PVDF-HFP) may be employed.

An all-solid-state battery manufacturing method according to the present invention may include (a) a step of manufacturing a first solid electrolyte layer slurry and a second solid electrolyte layer slurry, (b) a step of applying each of the first solid electrolyte layer slurry and the second solid electrolyte layer slurry to a release film by coating, (c) a step of drying a first solid electrolyte layer slurry coating layer and a second solid electrolyte layer slurry coating layer manufactured in step (b) to form a first solid electrolyte layer and a second solid electrolyte layer, (d) a step of stacking the first solid electrolyte layer and the second solid electrolyte layer so as to face each other and pressing the first solid electrolyte layer and the second solid electrolyte layer, € a step of removing the release film to acquire a solid electrolyte layer, and (f) a step of disposing the solid electrolyte layer between a positive electrode and a negative electrode to assemble an all-solid-state battery, wherein the second solid electrolyte layer may be disposed so as to face the negative electrode.

Step (d) may be performed using an isostatic pressing method such that uniform adhesion is achieved over the entirety of the interface between the first solid electrolyte layer and the second solid electrolyte layer.

When the first solid electrolyte layer and the second solid electrolyte layer are pressed by isostatic pressing, as described above, the pressure may be 10 MPa to 100 MPa, specifically 20 MPa to 50 MPa. If the isostatic pressure is lower than 10 MPa, the force of adhesion between the first solid electrolyte layer and the second solid electrolyte layer may be small, whereby layer separation may occur, which is undesirable. If the isostatic pressure is higher than 100 MPa, the solid electrolyte layer may become too hard, whereby the solid electrolyte layer may be broken, which is undesirable.

Step (d) may be performed at a temperate of 5°C to 150°C, specifically 25°C to 80°C.

If the temperature is lower than 5°C, pressing efficiency is lowered, which is undesirable. If the temperature is higher than 150°C, material deformation or decomposition occurs, which is undesirable.

The present invention provides a battery module including the all-solid-state battery as a unit cell. The battery module may be used as an energy source of a middle- or large-sized device that requires high-temperature stability, long cycle characteristics, and high capacity characteristics.

Examples of the middle- or large-sized device may include a power tool driven by an electric motor, an electric automobile, such as an electric vehicle (EV), a hybrid electric vehicle (HEV), or a plug-in hybrid electric vehicle (PHEV), an electric two-wheeled vehicle, such as an electric bicycle (E-bike) or an electric scooter (E-scooter), an electric golf cart, and an energy storage system; however, the present invention is not limited thereto.

Hereinafter, the present invention will be described with reference to the following examples; however, these examples are provided only for easier understanding of the present invention and should not be construed as limiting the scope of the present invention.

### <Manufacture Example 1>

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a first solid electrolyte layer slurry.

The first solid electrolyte layer slurry was applied to a polyethylene terephthalate (PET) release film by coating, and was dried in a vacuum state at 100°C for 12 hours to manufacture a first solid electrolyte layer having a thickness of 50 µm.

Argyrodite, as a solid electrolyte, alone was dispersed in anisole and was stirred to manufacture a second solid electrolyte layer slurry, and the second solid electrolyte layer slurry was applied to a polyethylene terephthalate release film by coating, and was dried in a vacuum state at 100°C for 12 hours to manufacture a second solid electrolyte layer having a thickness of 30 µm.

The second solid electrolyte layer was stacked on one surface of the first solid electrolyte layer to manufacture a solid electrolyte layer.

### <Manufacture Example 2>

A solid electrolyte layer was manufactured using the same method as in Manufacture Example 1 except that the first solid electrolyte layer was manufactured so as to have a thickness of 30 µm, unlike Manufacture Example 1.

### <Manufacture Example 3>

A solid electrolyte layer was manufactured so as to be constituted by only the first solid electrolyte layer having a thickness of 50 µm manufactured in Manufacture Example 1.

### <Reference Example>

No solid electrolyte layer was separately manufactured, a Ti mold was filled with argyrodite powder, and ionic conductivity of the argyrodite powder was measured.

### <Experimental Example 1> Ionic conductivity of solid electrolyte layer

In order to measure ionic conductivity of each of the solid electrolyte layers manufactured according to Manufacture Example 1 to Manufacture Example 3 and the argyrodite powder of Reference Example, the solid electrolyte layer was received in an aluminum pouch in a state of being interposed between Ni current collectors and the aluminum pouch was sealed in a vacuum state to manufacture an all-solid-state battery.

The all-solid-state battery was fastened to a jig, a pressure of 10 MPa was applied to the all-solid-state battery, and ionic conductivity was measured using impedance spectroscopy. The results are shown in Table 1 below.

**[Table 1]**

| | Ionic conductivity (mS/cm) |
|---|---|
| Manufacture Example 1 | 0.6 |
| Manufacture Example 2 | 0.7 |
| Manufacture Example 3 | 0.4 |
| Reference Example | 2.0 |

Referring to Table 1 above, it can be seen that the measured ionic conductivity of argyrodite of Reference Example was 2.0 mS/cm, which is high, whereas ionic conductivity was reduced for each of Manufacture Example 1 to Manufacture Example 3 each including the first solid electrolyte layer having the binder included therein.

The reason for this is that the binder, added to impart the force of adhesion between argyrodite particles at the time of manufacturing the solid electrolyte, was interposed between the argyrodite particles, whereby ionic conductivity was reduced.

The solid electrolyte of each of Manufacture Example 1 and Manufacture Example 2 including the second solid electrolyte layer not having a binder included therein exhibits higher ionic conductivity than the solid electrolyte of Manufacture Example 3 constituted by only the first solid electrolyte layer having the binder included therein.

In order to minimize reduction in ionic conductivity and particularly to increase contact between the solid electrolyte layer and the negative electrode at the interface between the negative electrode at which Li plating/stripping occurs at the time of charging and discharging and the solid electrolyte layer, therefore, it is preferable to include both the first solid electrolyte layer having the binder included therein and the second solid electrolyte layer not having a binder included therein.

### <Example 1>

In order to manufacture a positive electrode for all-solid-state batteries, LiNi_{0.8}Co_{0.1}Mn_{0.1}O₂, as a positive electrode active material, argyrodite (Li₆PS₅Cl), as a solid electrolyte, furnace black, as a conductive agent, and polytetrafluoroethylene, as a binder, were dispersed in anisole in a weight ratio of 77.5:19.5:1.5:1.5, and were stirred to manufacture a positive electrode slurry. The positive electrode slurry was applied to an aluminum current collector having a thickness of 14 µm by doctor blade coating, and was dried in a vacuum state at 100°C for 12 hours to manufacture a positive electrode.

In order to manufacture a negative electrode for all-solid-state batteries including a coating layer and an ion transport layer, sputtering using Ag was performed on a nickel current collector having a thickness of 10 µm so as to have a size of 30 nm, whereby a coating layer constituted by an Ag layer was formed. Subsequently, a slurry constituted by a mixture of acetylene black and polyvinylidene fluoride mixed in a weight ratio of 97:3 was applied to the Ag layer by coating to form an ion transport layer, and the ion transport layer was dried, whereby a negative electrode having a multilayer structure was manufactured.

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a first solid electrolyte layer slurry.

The first solid electrolyte layer slurry was applied to a polyethylene terephthalate (PET) release film by coating, and was dried in a vacuum state at 100°C for 12 hours to manufacture a first solid electrolyte layer having a thickness of 50 µm.

Argyrodite, as a solid electrolyte, alone was dispersed in anisole and was stirred to manufacture a second solid electrolyte layer slurry, and the second solid electrolyte layer slurry was applied to a polyethylene terephthalate release film by coating, and was dried in a vacuum state at 100°C for 12 hours to manufacture a second solid electrolyte layer having a thickness of 30 µm.

The second solid electrolyte layer was stacked on one surface of the first solid electrolyte layer, and the stack was pressed at 25°C using a cold isostatic press at a pressure of 50 MPa to manufacture a solid electrolyte layer.

The release film was removed from the laminated solid electrolyte layer, and the solid electrolyte layer was disposed between the positive electrode and the negative electrode.

The solid electrolyte layer interposed between the positive electrode and the negative electrode was received in an aluminum pouch in the state in which the second solid electrolyte layer faced the negative electrode and the first solid electrolyte layer faced the positive electrode, and the aluminum pouch was sealed to manufacture an all-solid-state battery.

### <Example 2>

An all-solid-state battery was manufactured using the same method as in Example 1 except that the thickness of the first solid electrolyte layer was 30 µm, unlike Example 1.

### <Example 3>

An all-solid-state battery was manufactured using the same method as in Example 1 except that pressing was performed at 25°C using the cold isostatic press at a pressure of 20 MPa in order to achieve lamination, unlike Example 1.

### <Example 4>

An all-solid-state battery was manufactured using the same method as in Example 1 except that pressing was performed at 80°C using a hot isostatic press at a pressure of 20 MPa in order to achieve lamination, instead of the cold isostatic press, unlike Example 1.

### <Comparative Example 1>

An all-solid-state battery was manufactured using the same method as in Example 1 except that the solid electrolyte layer was constituted by only a first solid electrolyte layer having a thickness of 50 µm, unlike Example 1.

### <Comparative Example 2>

An all-solid-state battery was manufactured using the same method as in Example 1 except that the solid electrolyte layer was constituted by only a second solid electrolyte layer having a thickness of 30 µm, unlike Example 1.

### <Comparative Example 3>

An all-solid-state battery was manufactured using the same method as in Example 1 except that the solid electrolyte layer was disposed between the positive electrode and the negative electrode such that the first solid electrolyte layer faced the negative electrode and the second solid electrolyte layer faced the positive electrode, unlike Example 1.

### <Comparative Example 4>

An all-solid-state battery was manufactured using the same method as in Example 1 except that pressing was performed at 25°C using the cold isostatic press at a pressure of 200 MPa in order to achieve lamination, unlike Example 1.

### <Comparative Example 5>

An all-solid-state battery was manufactured using the same method as in Example 1 except that pressing was performed at 25°C using the cold isostatic press at a pressure of 5 MPa in order to achieve lamination, unlike Example 1.

### <Comparative Example 6>

An all-solid-state battery was manufactured using the same method as in Example 1 except that pressing was performed at 25°C using a roll press in order to achieve lamination, instead of the cold isostatic press, unlike Example 1.

### <Comparative Example 7>

An all-solid-state battery was manufactured using the same method as in Example 1 except that pressing was performed at 25°C using a hot press (uniaxial pressing) at a pressure of 50 MPa in order to achieve lamination, instead of the cold isostatic press, unlike Example 1.

### <Experimental Example 2>

The all-solid-state batteries manufactured according to Example 1 to Example 4 and Comparative Example 1 to Comparative Example 7 were prepared, were charged to 4.25 V at 0.05 C in a constant current-constant voltage mode at 60°C, and were discharged to 3.0 V at 0.05 C to measure initial charge and discharge capacities and efficiencies thereof.

Also, in order to evaluate lifespan characteristics of the all-solid-state batteries, the batteries were charged and discharged five times with a voltage range of 4.25 V to 3.0 V under 0.1 C charging/0.1 C discharging conditions.

The measured initial charge capacity, initial discharge capacity, charging and discharging efficiency, and retention rate of each all-solid-state battery are shown in Table 2 below.

In Table 2 below, the initial charge capacity and the initial discharge capacity indicate the charge capacity and the discharge capacity at a first cycle, and the charging and discharging efficiency indicates the ratio of the discharge capacity to the charge capacity at the first cycle. Also, in Table 2 below, the retention rate indicates the ratio of the discharge capacity measured at a fifth cycle to the discharge capacity measured at the first cycle.

**[Table 2]**

| | Initial charge capacity (mAh) | Initial discharge capacity (mAh) | Charging and discharging efficiency (%) | Retention rate (%@5 cycle) |
|---|---|---|---|---|
| Example 1 | 27.0 | 24.2 | 89.6 | 99.9 |
| Example 2 | 28.7 | 25.8 | 89.9 | 99.7 |
| Example 3 | 26.8 | 23.8 | 88.8 | 99.7 |
| Example 4 | 27.2 | 24.4 | 89.7 | 99.9 |
| Comparative Example 1 | 23.4 | 20.3 | 86.8 | 92.8 |
| Comparative Example 2 | - | - | - | - |
| Comparative Example 3 | 27.3 | 24.3 | 89.0 | 94.9 |
| Comparative Example 4 | Broken | - | - | - |
| Comparative Example 5 | Two layers separated | | | |
| Comparative Example 6 | Short circuit | - | - | - |
| Comparative Example 7 | Short circuit | | | |

Referring to Table 2 above, it can be confirmed that the charging and discharging efficiency and the retention rate of each of the all-solid-state batteries according to Example 1 to Example 4 are higher than the charging and discharging efficiency and the retention rate of the all-solid-state battery according to Comparative Example 1. The reason for this seems to be that, as can be confirmed from Experimental Example 1, ionic conductivity of the solid electrolyte layer constituted by the first solid electrolyte layer and the second solid electrolyte layer is higher than ionic conductivity of the solid electrolyte layer constituted by the first solid electrolyte layer alone.

For the all-solid-state battery according to Comparative Example 2, constituted by only the second solid electrolyte layer not having a binder included therein, the strength of the solid electrolyte layer was small, and therefore it was impossible to manufacture the all-solid-state battery.

For Comparative Example 4, in which pressing was performed at 200 MPa in order to laminate the two solid electrolyte layers, the manufactured solid electrolyte layer was too hard, thus being broken, and therefore it was impossible to use the solid electrolyte layer. For Comparative Example 5, in which pressing was performed at 5 MPa, the pressing force was too low, whereby the two layers were not adhered to each other but were separated from each other. Consequently, it can be seen that, when the two-layered solid electrolyte layer is manufactured using the isostatic pressing method, it is necessary to apply an appropriate level of pressure.

Meanwhile, for Comparative Example 6, in which pressing was performed using the roll press, and Comparative Example 7, in which pressing was performed using the hot press, the two solid electrolyte layers were adhered into one, but the adhered surface was not uniform, and therefore short circuit occurred at the time of charging. Consequently, application to the all-solid-state battery was difficult.

When comparing lifespan characteristics, the retention rate of each of Example 1 to Example 4 is higher than the retention rate of Comparative Example 1.

In addition, when comparing Example 1 to Example 4 to Comparative Example 3, the second solid electrolyte layer not having a binder included therein is disposed so as to face the negative electrode in Example 1 to Example 4, and therefore the contact area between the solid electrolyte particles and the negative electrode increases, whereby formation of lithium dendrites may be delayed and the retention rate may be maintained high.

As described above, the all-solid-state battery according to the present invention includes a structure in which the contact area between the solid electrolyte layer and the negative electrode is increased, whereby it is possible to reduce reduction in ionic conductivity, and therefore it is possible to provide an all-solid-state battery with improved lifespan characteristics.

### (Description of Reference Numerals)

110, 210: Solid electrolyte particles
120, 220: Solid electrolyte layers
130, 230: Binders
140, 240: Negative electrodes
221: First solid electrolyte layer
222: Second solid electrolyte layer

## Claims

1. An all-solid-state battery comprising:
a positive electrode;
a negative electrode; and
a solid electrolyte interposed between the positive electrode and the negative electrode,
wherein the solid electrolyte is constituted by a first solid electrolyte layer (221) comprising a binder (230) and a second solid electrolyte layer (222) not comprising a binder, and
wherein the second solid electrolyte layer faces the negative electrode, (240)
wherein the binder is one or more selected from a group consisting of polytetrafluoroethylene, polyethylene oxide, polyethylene glycol, polyacrylonitrile, polyvinyl chloride, polymethyl methacrylate, polypropylene oxide, polyphosphazene, polysiloxane, polydimethylsiloxane, polyvinylidene fluoride, polyvinylidene fluoride-hexafluoropropylene (PVDF-HFP), polyvinylidene fluoride-chlorotrifluoroethylene (PVDF-CTFE), polyvinylidene fluoride-tetrafluoroethylene (PVDF-TFE), polyvinylidene carbonate, polyvinylpyrrolidone, styrene-butadiene rubber, nitrile-butadiene rubber, and hydrogenated nitrile butadiene rubber.

2. The all-solid-state battery according to claim 1, wherein ingredients of the first solid electrolyte layer and the second solid electrolyte layer are identical to each other except the binder.

3. The all-solid-state battery according to claim 1, wherein a thickness of the first solid electrolyte layer is equal to or greater than a thickness of the second solid electrolyte layer.

4. The all-solid-state battery according to claim 1, wherein the binder is included in the first solid electrolyte layer in an amount of 0.2 weight% to 15 weight% based on a total weight of a solid content included in the first solid electrolyte layer.

5. The all-solid-state battery according to claim 1, wherein the first solid electrolyte layer and the second solid electrolyte layer are adhered to each other.

6. The all-solid-state battery according to claim 1, wherein the negative electrode does not comprise a negative electrode mixture layer.

7. The all-solid-state battery according to claim 1, wherein the negative electrode comprises a coating layer and an ion transport layer.

8. The all-solid-state battery according to claim 1, wherein solid electrolyte particles present at a surface of the second solid electrolyte layer contact the negative electrode.

9. A battery module comprising the all-solid-state battery according to any one of claims 1 to 8 as a unit cell.

10. A method of manufacturing the all-solid-state battery according to any one of claims 1 to 8, the method comprising:
(a) manufacturing a first solid electrolyte layer slurry and a second solid electrolyte layer slurry;
(b) applying each of the first solid electrolyte layer slurry and the second solid electrolyte layer slurry to a release film by coating;
(c) drying a first solid electrolyte layer slurry coating layer and a second solid electrolyte layer slurry coating layer manufactured in step (b) to form a first solid electrolyte layer and a second solid electrolyte layer;
(d) stacking the first solid electrolyte layer and the second solid electrolyte layer so as to face each other and pressing the first solid electrolyte layer and the second solid electrolyte layer;
(e) removing the release film to acquire a solid electrolyte layer; and
(f) disposing the solid electrolyte layer between a positive electrode and a negative electrode to assemble an all-solid-state battery,
wherein the second solid electrolyte layer is disposed so as to face the negative electrode.

11. The method according to claim 10, wherein step (d) is performed using an isostatic pressing method.

12. The method according to claim 11, wherein isostatic pressing is performed at a pressure of 10 MPa to 100 MPa.

13. The method according to claim 10, wherein step (d) is performed at a temperate of 5°C to 150°C.

## Patentansprüche

1. Festkörperbatterie, umfassend:
eine positive Elektrode;
eine negative Elektrode; und
einen Festelektrolyt, der zwischen der positiven Elektrode und der negativen Elektrode angeordnet ist,
wobei der Festelektrolyt aus einer ersten Festelektrolytschicht (221), die ein Bindemittel (230) umfasst, und einer zweiten Festelektrolytschicht (222), die kein Bindemittel umfasst, besteht, und
wobei die zweite Festelektrolytschicht der negativen Elektrode (240) zugewandt ist,
wobei das Bindemittel eines oder mehrere ausgewählt aus einer Gruppe bestehend aus Polytetrafluorethylen, Polyethylenoxid, Polyethylenglycol, Polyacrylnitril, Polyvinylchlorid, Polymethylmethacrylat, Polypropylenoxid, Polyphosphazen, Polysiloxan, Polydimethylsiloxan, Polyvinylidenfluorid, Polyvinylidenfluorid-Hexafluorpropylen (PVDF-HFP), Polyvinylidenfluorid-Chlortrifluorethylen (PVDF-CTFE), Polyvinylidenfluorid-Tetrafluorethylen (PVDF-TFE), Polyvinylidencarbonat, Polyvinylpyrrolidon, Styrol-Butadien-Kautschuk, Nitril-Butadien-Kautschuk und hydriertem Nitril-Butadien-Kautschuk ist.

2. Festkörperbatterie nach Anspruch 1, wobei Bestandteile der ersten Festelektrolytschicht und der zweiten Festelektrolytschicht mit Ausnahme des Bindemittels miteinander identisch sind.

3. Festkörperbatterie nach Anspruch 1, wobei eine Dicke der ersten Festelektrolytschicht gleich oder größer als eine Dicke der zweiten Festelektrolytschicht ist.

4. Festkörperbatterie nach Anspruch 1, wobei das Bindemittel in der ersten Festelektrolytschicht in einer Menge von 0,2 Gew.-% bis 15 Gew.-%, bezogen auf ein Gesamtgewicht eines in der ersten Festelektrolytschicht enthaltenen Feststoffgehalts, enthalten ist.

5. Festkörperbatterie nach Anspruch 1, wobei die erste Festelektrolytschicht und die zweite Festelektrolytschicht aneinander haften.

6. Festkörperbatterie nach Anspruch 1, wobei die negative Elektrode keine Negativelektrodenmischungsschicht umfasst.

7. Festkörperbatterie nach Anspruch 1, wobei die negative Elektrode eine Beschichtungsschicht und eine Ionentransportschicht umfasst.

8. Festkörperbatterie nach Anspruch 1, wobei Festelektrolytpartikel, die an einer Oberfläche der zweiten Festelektrolytschicht vorhanden sind, die negative Elektrode kontaktieren.

9. Batteriemodul, umfassend die Festkörperbatterie nach einem der Ansprüche 1 bis 8 als eine Einheitszelle.

10. Verfahren zum Herstellen der Festkörperbatterie nach einem der Ansprüche 1 bis 8, wobei das Verfahren umfasst:
(a) Herstellen einer ersten Festelektrolytschichtaufschlämmung und einer zweiten Festelektrolytschichtaufschlämmung;
(b) Auftragen jeder der ersten Festelektrolytschichtaufschlämmung und der zweiten Festelektrolytschichtaufschlämmung auf einen Trennfilm durch Beschichten;
(c) Trocknen einer ersten Festelektrolytschichtaufschlämmungsbeschichtungsschicht und einer zweiten Festelektrolytschichtaufschlämmungsbeschichtungsschicht, die in Schritt (b) hergestellt wurden, um eine erste Festelektrolytschicht und eine zweite Festelektrolytschicht zu bilden;
(d) Stapeln der ersten Festelektrolytschicht und der zweiten Festelektrolytschicht, so dass sie einander zugewandt sind, und Pressen der ersten Festelektrolytschicht und der zweiten Festelektrolytschicht;
(e) Entfernen des Trennfilms, um eine Festelektrolytschicht zu erhalten; und
(f) Anordnen der Festelektrolytschicht zwischen einer positiven Elektrode und einer negativen Elektrode, um eine Festkörperbatterie zusammenzubauen,
wobei die zweite Festelektrolytschicht so angeordnet ist, dass sie der negativen Elektrode zugewandt ist.

11. Verfahren nach Anspruch 10, wobei Schritt (d) unter Verwendung eines isostatischen Pressverfahrens durchgeführt wird.

12. Verfahren nach Anspruch 11, wobei das isostatische Pressen bei einem Druck von 10 MPa bis 100 MPa durchgeführt wird.

13. Verfahren nach Anspruch 10, wobei Schritt (d) bei einer Temperatur von 5 °C bis 150 °C durchgeführt wird.

## Revendications

1. Batterie tout solide comprenant :
une électrode positive ;
une électrode négative ; et
un électrolyte solide interposé entre l'électrode positive et l'électrode négative,
où l'électrolyte solide est constitué d'une première couche électrolytique solide (221) qui comprend un liant (230) et d'une seconde couche électrolytique solide (222) qui ne comprend pas un liant et
où la seconde couche électrolytique solide fait face à l'électrode négative (240),
où le liant est un ou plusieurs sélectionnés dans le groupe consistant en les suivants : poly(tétrafluoroéthylène), poly(oxyde d'éthylène), poly(éthylène glycol), poly(acrylonitrile), poly(chlorure de vinyle), poly(méthacrylate de méthyle), poly(oxyde de propylène), polyphosphazène, polysiloxane, poly(diméthylsiloxane), poly(fluorure de vinylidène), poly(fluorure de vinylidène-hexafluoropropylène) (PVDF-HFP), poly(fluorure de vinylidène-chlorotrifluoroéthylène) (PVDF-CTFE), poly(fluorure de vinylidène-tétrafluoroéthylène) (PVDF-TFE), poly(carbonate de vinylidène), polyvinylpyrrolidone, caoutchouc styrène-butadiène et caoutchouc nitrile-butadiène hydrogéné.

2. Batterie tout solide selon la revendication 1, où les ingrédients de la première couche électrolytique solide et de la seconde couche électrolytique solide sont identiques, à l'exception du liant.

3. Batterie tout solide selon la revendication 1, où une épaisseur de la première couche électrolytique solide est égale ou supérieure à une épaisseur de la seconde couche électrolytique solide.

4. Batterie tout solide selon la revendication 1, où le liant est inclus dans la première couche électrolytique solide à une quantité, rapportée à un poids total d'un contenu en solides inclus dans la première couche électrolytique solide, qui va de 0,2 % en poids à 15 % en poids.

5. Batterie tout solide selon la revendication 1, où la première couche électrolytique solide et la seconde couche électrolytique solide sont adhérées l'une à l'autre.

6. Batterie tout solide selon la revendication 1, où l'électrode négative ne comprend pas une couche de mélange servant d'électrode négative.

7. Batterie tout solide selon la revendication 1, où l'électrode négative comprend une couche de revêtement et une couche de transport ionique.

8. Batterie tout solide selon la revendication 1, où les particules électrolytiques solides présentes sur une surface de la seconde couche électrolytique solide sont en contact avec l'électrode négative.

9. Module de batterie comprenant la batterie tout solide selon l'une quelconque des revendications 1 à 8 en tant que cellule unitaire.

10. Procédé de fabrication de la batterie tout solide selon l'une quelconque des revendications 1 à 8, le procédé comprenant :
(a) la fabrication d'une pâte utilisée pour produire une première couche électrolytique solide et d'une pâte utilisée pour produire une seconde couche électrolytique solide ;
(b) l'application de la pâte utilisée pour produire la première couche électrolytique solide et de la pâte utilisée pour produire la seconde couche électrolytique solide sur un film de séparation par enduction ;
(c) le séchage d'une couche d'enduction de la pâte utilisée pour produire la première couche électrolytique solide et d'une couche d'enduction de la pâte utilisée pour produire la seconde couche électrolytique solide fabriquées à l'étape (b) pour former une première couche électrolytique solide et une seconde couche électrolytique solide ;
(d) l'empilement de la première couche électrolytique solide et de la seconde couche électrolytique solide de manière qu'elles soient face à face et l'exercice d'une pression sur la première couche électrolytique solide et la seconde couche électrolytique solide ;
(e) le retrait du film de séparation pour obtenir une couche électrolytique solide ; et
(f) le positionnement de la couche électrolytique solide entre une électrode positive et une électrode négative pour assembler une batterie tout solide,
où la seconde couche électrolytique solide est positionnée de manière à faire face à l'électrode négative.

11. Procédé selon la revendication 10, où l'étape (d) est effectuée au moyen d'une méthode de compression isostatique.

12. Procédé selon la revendication 11, où la compression isostatique est effectuée à une pression qui va de 10 MPa à 100 MPa.

13. Procédé selon la revendication 10, où l'étape (d) est effectuée à une température qui va de 5 °C à 150 °C.
